# EUROPÄISCHE PATENTSCHRIFT

(11) **EP 2 727 208 B1**
(45) Veröffentlichungstag und Bekanntmachung des Hinweises auf die Patenterteilung: **28.03.2018**
(21) Anmeldenummer: 12724133.9
(22) Anmeldetag: 25.05.2012
(51) Int. Cl.: H02J 7/00, B60L 11/18, G01R 31/36, H01M 10/48, G08C 19/00, G08C 23/04, H02J 7/02, H02J 50/10, H02J 50/60, H01M 10/42

(54) **ANORDNUNG UND VERFAHREN ZUM INDUKTIVEN LADEN EINER BATTERIEVORRICHTUNG**
ARRANGEMENT AND METHOD FOR INDUCTIVE CHARGING OF A BATTERY DEVICE
ARRANGEMENT ET PROCEDE DE CHARGEMENT INDUCTIVE D'UN DISPOSITIF DE BATTERIE

(30) Priorität: 30.06.2011 DE 102011078386
(43) Veröffentlichungstag der Anmeldung: 07.05.2014
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2012/059858
(87) Internationale Veröffentlichungsnummer: WO 2013/000644

(56) Entgegenhaltungen:
- EP-A2- 0 985 573
- WO-A2-98/01917
- WO-A2-2010/033517
- US-A- 5 206 097
- US-A1- 2006 087 286
- US-B1- 6 265 844

## Beschreibung

Die Erfindung betrifft ein System zum induktiven Laden einer Batterievorrichtung, wie z.B. eines Akkupacks oder eines elektrischen Geräts mit integrierten Batteriezellen, mithilfe einer Ladestation. Die Ladestation umfasst dabei eine Lichtschranke mit einer Lichtquelle und einer elektrooptischen Empfangseinrichtung, welche bei eingesetzter Batterievorrichtung den Empfänger eines diskret aufgebauten Optokopplers zum Schließen des Regelkreises des Ladesystems bildet.

### Stand der Technik

Batterievorrichtungen, wie z. B. Akku-, Batteriepacks oder Endgeräte mit fest eingebauten aufladbaren Batteriezellen, werden typischerweise mithilfe externer Ladestationen geladen. Dabei kommen unter anderem Ladeverfahren zum Einsatz, die eine kontaktlose Energieübertragung zwischen Ladestation und Batterievorrichtung verwenden. So kann beispielsweise bei einem induktiven Ladesystem Energie mittels eines magnetischen Feldes übertragen werden. Hierzu erzeugt eine in der Ladestation untergebrachte Sendespule ein magnetisches Wechselfeld, welches in einer entsprechenden Empfangsspule der Batterievorrichtung einen elektrischen Wechselstrom induziert. Damit Energie von der Ladestation an die Empfangseinheit effektiv abgegeben werden kann, ist jedoch eine induktive Kopplung zwischen den beiden Geräten erforderlich. So müssen Sende- und Empfangsspule je nach Qualität der induktiven Kopplung typischerweise in einem relativ geringen Abstand von wenigen Millimetern bis einigen Zentimetern voneinander angeordnet werden, wobei sich die induktive Kopplung durch einen ferromagnetischen Kern in Sende- und Empfangsspule verbessern lässt.

Bei einem auf Basis einer induktiven Energieübertragung basierenden drahtlosen Ladesystem können sich je nach Ausführung verschiedene Probleme ergeben. So muss in der Ladestation beispielsweise eine ausreichende Erkennung eines eingesteckten Batteriepakets sichergestellt werden, was im Standby-Modus der Ladestation ein zyklisches "Anpingen" der Batterievorrichtung erfordert. Ferner ist ein ausreichender Kommunikationsweg zwischen Batteriepaket und Ladestation notwendig, um den Zeitpunkt des Ladeendes bzw. des Nachladens bestimmen und den benötigten Energiebedarf kommunizieren zu können. Darüber hinaus müssen Fremdobjekte zweifelsfrei und einfach erkannt werden. Ferner muss ein ausreichend robustes Rückkopplungssystem zum Schließen des Regelkreises vorgesehen werden.

Es sind bereits verschiedene Ansätze bekannt, welche optische Übertragungssysteme bei Ladesystemen vorsehen. So beschreibt die DE 29724016 U1 z.B. ein Ladegerät für einen Akkumulator, bei dem mithilfe von Lichtschranken eine Erkennung von Akkumulatoren mit verschiedenen Kapazitäten realisiert ist. Ferner weist das Ladegerät eine IR-Schnittstelle zum Übertragen von Informationen vom Akkumulator zum Ladegerät auf.

Aus der US 5,536,979 A ist ein Ladegerät zum induktiven Laden einer Handwerkzeugmaschine bekannt, bei dem die Handwerkzeugmaschine den vollen Ladezustand seiner internen Batteriezellen mithilfe einer Photodiode an das Ladegerät kommuniziert.

Aus der DE 19955985 A1 U1 ist ferner ein Ladegerät zum Aufladen von Akkus bekannt, wobei das Ladegerät eine Lichtschranke zum Erkennen eines eingelegten Akkus umfasst.

Aus der DE 202009002787 U1 ist ferner ein Akkupack mit einem Kodierstift zum Unterbrechen einer im Ladegerät angeordneten Lichtschranke bekannt.

Aus der US 5,206,097 A ist eine Ladeanordnung umfassend eine Batterievorrichtung und eine Ladegerät bekannt, bei welcher Informationen zwischen Batterievorrichtung und Ladegerät mittels gepulster Lichtstrahlung übertragen werden. Hierzu weisen Ladegerät und Batterievorrichtung entsprechende optische Einrichtungen auf.

Aus der WO 98/01917 A2 ist ein Ladegerät zum Laden eines Akkumulators bekannt Das Ladegerät weist dabei eine optische Schnittstelle zur Kommunikation mit einen angeschlossenen Akkumulator auf

Aus der WO 2010/033517 A2 ist unter anderem ein Ladesystem zum induktiven Laden elektrischer Fahrzeuge bekannt, bei welchem ein an das elektrische Fahrzeug angeschlossenes Ladegerät bzw. Ladekabel mittels eines optischen Sensors detektiert wird.

Es ist daher Aufgabe der Erfindung, die Leistungsaufnahme einer Ladestation zum induktiven Laden einer Batterievorrichtung zu reduzieren Diese Aufgabe wird durch ein System gemäß Anspruch 1 und ein Verfahren nach Anspruch 7 gelöst. Weitere vorteilhafte Ausführungsformen sind in den untergeordneten Ansprüchen angegeben.

Gemäß der Erfindung ist eine Anordnung zur Versorgung eines elektrischen Verbrauchers, insbesondere eine Anordnung zum Laden einer Batterievorrichtung umfassend eine Ladestation mit einer Aufnahmeeinnchtung für die Batterievorrichtung und einer Detektionseinrichtung für die Batterievorrichtung, wobei die Detektionseinrichtung eine erste optische Sendeeinrichtung zum Aussenden eines ersten optischen Signals und eine optischen Empfangseinrichtung zum Empfangen des ersten optischen Signals umfasst. Die Batterievorrichtung umfasst dabei eine zweite optische Sendeeinrichtung zum Aussenden eines zweiten und eines dritten optischen Signals, wobei die zweite optische Sendeeinrichtung als Sender eines diskret aufgebauten Optokopplers zum Übertragen von Informationen von der Batterievorrichtung zur Ladestation dient. Die optische Empfangseinrichtung der Ladestation ist dabei als Empfänger des diskret aufgebauten Optokopplers zum Empfangen des zweiten und des dritten optischen Signals ausgebildet. Durch den Optokoppler ist eine robuste und gegenüber elektromagnetischen Einstreuungen störsichere Kommunikationsverbindung zwischen Batterievorrichtung und Ladestation möglich, welche eine optimale Rückkopplung des benötigten Energiebedarfs ermöglicht. Durch die Kombination der Detektions- und Kommunikationsfunktion, wobei die optische Empfangseinrichtung sowohl zur Detektion der Batterievorrichtung als auch zur Kommunikation zwischen Batterievorrichtung und Ladestation verwendet wird, können Bauteile eingespart werden, was sich unter anderem in einer vereinfachten Herstellung sowie reduzierten Herstellungskosten niederschlägt

In einer Ausführungsform ist vorgesehen, dass die Batterievorrichtung ein Gehäuse mit einem zapfenförmigen Gehäuseteil aufweist, welcher beim Einsetzen der Batterievorrichtung zwischen der ersten optischen Sendeeinrichtung und der optischen Empfangseinrichtung der Ladestation eingebracht wird und dabei das erste optische Signal unterbricht. Die zweite optische Sendeeinrichtung ist dabei in dem zapfenförmigen Gehäuseteil derart untergebracht, dass sie sich bei eingesetzter Batterievorrichtung im Sichtfeld der optischen Empfangseinrichtung befindet Der die Anordnung der zweiten optischen Sendeeinrichtung in dem zapfenförmigen Gehäuseteil ermöglicht eine besonders einfache Anordnung der optischen Einrichtungen. Der zapfenförmige Gehäuseteil dient dabei sowohl zur Abschirmung der ersten optischen Sendeeinrichtung als auch zur Positionierung der zweiten optischen Sendeeinrichtung im Sichtfeld der optischen Empfangseinrichtung.

Eine weitere Ausführungsform sieht vor, dass die Ladestation einen Aufnahmeschacht für den zapfenförmigen Gehäuseteil der Batterievorrichtung umfasst, in welchem die optische Sendeeinrichtung und die optische Empfangseinrichtung der Ladestation einander gegenüber liegend angeordnet sind. Der Aufnahmeschacht erlaubt eine sichere Unterbringung der optischen Sende- und Empfangseinrichtung. Ferner ist es möglich, den Aufnahmeschacht für eine Batterievorrichtung individuell zu gestalten bzw. anzuordnen, so dass sichergestellt ist, dass nur eine dafür vorgesehene Batterievorrichtung mit der Ladestation geladen werden kann. Hiermit lassen sich eventuelle Bedienfehler vermeiden.

In einer weiteren Ausführungsform ist vorgesehen, dass der Aufnahmeschacht als eine durchgehende Öffnung innerhalb des Gehäuses der Ladestation ausgebildet ist. Diese Ausführung ermöglicht, dass Fremdkörper und Schmutzpartikel, welche in den Aufnahmeschacht hinein gelangen, durch die durchgehende Öffnung hindurch fallen und sich nicht innerhalb des Aufnahmeschachts ansammeln können. Hierdurch werden Funktionsstörungen der optischen Einrichtungen wirkungsvoll vermieden.

Gemäß einer weiteren Ausführungsform ist vorgesehen, dass die Ladestation eine induktive Sendespule zur Übertragung von Energie in Form eines magnetischen Wechselfeldes an eine induktive Empfangsspule der Batterievorrichtung umfasst. Die Ladestation ist dabei ausgebildet, mit der Übertragung der Energie zu beginnen, wenn der Empfang des ersten optischen Signals über eine vorgegebene erste Zeitspanne unterbrochen wird. Ferner ist die Ladestation ausgebildet, die Übertragung der Energie zu stoppen, wenn über eine vorgegebene zweite Zeitspanne kein zweites optisches Signal empfangen wird und/oder wenn das dritte optische Signal empfangen wird. Durch die Energieübertragung direkt nach dem Unterbrechen des ersten optischen Signals durch das Einsetzen der Batterievorrichtung kann sichergestellt werden, dass auch eine tief entladene Batterievorrichtung nach dem Einsetzen in die Ladestation ausreichend Energie erhält, um die für die Initiierung des eigentlichen Ladevorgangs notwendige Informationen zur Ladestation übertragen zu können. Die automatisch erfolgende Unterbrechung der Energieübertragung, wenn die Batterievorrichtung über eine vorgegebene zweite Zeitspanne kein zweites optisches Signal an die Ladestation sendet, erlaubt hingegen die eindeutige Erkennung von Fremdobjekten. Ferner ermöglicht die Unterbrechung der Energieübertragung bzw. das Überführen der Ladestation in den Standby-Modus nach Empfang des dritten optischen Signals das Beenden des Ladevorgangs durch die Batterievorrichtung. Generell lässt sich mithilfe der Unterbrechung der Energieübertragung eine deutliche Reduktion der Leistungsaufnahme der Ladestation erzielen. Ferner verhindert das Abschalten der Energieübertragung, dass das magnetische Feld sich störend auf die Umgebung der Ladestation auswirkt oder zu einer unerwünschten Erwärmung von Fremdobjekte führt.

In einer weiteren Ausführungsform ist vorgesehen, dass die Batterievorrichtung ausgebildet ist, Informationen zur Identifikation, zum aktuellen Ladestatus bzw. Kapazitäts-Restmenge, zu einer eventuellen Fehlfunktion und/oder zum aktuellen Leistungsbedarf der Batterievorrichtung mithilfe eines optischen Puls-Übertragungsprotokolls über die optische Sendeeinrichtung an die optische Empfangseinrichtung der Ladestation zu senden. Ein solches Puls-Übertragungsprotokoll ist robust gegenüber Störungen und lässt sich darüber hinaus relativ einfach realisieren.

Ferner ist ein erfindungsgemäßes Verfahren zum Versorgen eines elektrischen Verbrauchers, insbesondere zum induktiven Laden einer Batterievorrichtung vorgesehen, wobei die Batterievorrichtung in eine Aufnahmeeinrichtung der Ladestation eingesetzt wird. Dabei wird mithilfe einer aus einer ersten optischen Sendeeinrichtung, welche ein erstes optisches Signal aussendet, und einer optischen Empfangseinrichtung, welches das erste optische Signal empfängt, bestehenden Detektionseinrichtung das Einsetzen der Batterievorrichtung in die Aufnahmeeinrichtung detektiert. Dabei wird eine Energieübertragung von einer induktiven Sendespule der Ladestation zu einer induktiven Empfangsspule der Batterievorrichtung gestartet, wenn die Übertragung des ersten optischen Signals über einen vorgegebenen ersten Zeitraum unterbrochen wird. Ferner wird der Ladevorgang gestartet, wenn die optische Empfangseinrichtung innerhalb der zweiten Zeitspanne ein zweites optisches Signal von einer zweiten optischen Sendeeinrichtung der Batterievorrichtung empfängt. Schließlich wird der Ladevorgang gestoppt, wenn die optische Empfangseinrichtung ein drittes optisches Signal von der zweiten optischen Sendeeinrichtung empfängt.

In einer weiteren Ausführungsform des erfindungsgemäßen Verfahrens wird die Energieübertragung wieder gestoppt, wenn die optische Empfangseinrichtung nach Ablauf der zweiten Zeitspanne kein zweites optisches Signal von einer zweiten optischen Sendeeinrichtung der Batterievorrichtung empfängt. Hierdurch kann auf eine relativ einfache Weise eine wirkungsvolle Fehlererkennung realisiert werden, welche die Energieübertragung bei defekter Batterievorrichtung oder beim Einsetzen eines Fremdobjekts automatisch stoppt.

Eine weitere Ausführungsform sieht vor, dass der Ladevorgang gestoppt wird, wenn die optische Empfangseinrichtung nach Entnahme der Batterievorrichtung erneut das erste optische Signal empfängt. Hiermit wird auf eine sehr einfache Weise ein automatischer Wechsel in den Standby-Modus bei Entnahme der Batterievorrichtung realisiert.

Schließlich sieht eine weitere Ausführungsform vor, dass der Ladevorgang wieder gestartet wird, wenn bei eingesetzter Batterievorrichtung die Übertragung des dritten optischen Signals von der zweiten optischen Sendereinrichtung zur optischen Empfangseinrichtung über einen Zeitraum unterbrochen wird, welcher wenigstens der ersten Zeitspanne entspricht. Bei dieser Ausführung wird den Batteriezellen der Batterievorrichtung keine Energie für die Anforderung einer erneuten Energieübertragung entnommen. Somit kann mithilfe dieses Verfahrens eine Batterievorrichtung auch dann erneut nachgeladen werden, wenn die Batteriezellen der Batterievorrichtung einen kritischen Ladestand aufweisen.

Die Erfindung wird im Folgenden anhand von Zeichnungen näher erläutert. Es zeigen:
Fig. 1 eine schematische Darstellung der erfindungsgemäßen Anordnung mit einer Batterievorrichtung und einer Ladestation zum induktiven Laden der Batterievorrichtung;
Fig. 2 die Anordnung aus Figur 1, wobei die Batterievorrichtung zum Laden in einer Aufnahmeeinrichtung der Ladestation eingesteckt ist;
Fig. 4 einen innerhalb des Aufnahmeschachts eingeführten zapfenförmigen Gehäuseteil der Batterievorrichtung während eines Ladevorgangs;
Fig. 5 die Signalabfolge an der optischen Empfangseinrichtung der Ladestation in verschiedenen Betriebssituationen zur Verdeutlichung des erfindungsgemäßen Verfahrens, und
Fig. 6 eine alternative Ausführungsform der Ladestation mit einem als durchgehende Öffnung ausgebildeten Aufnahmeschacht

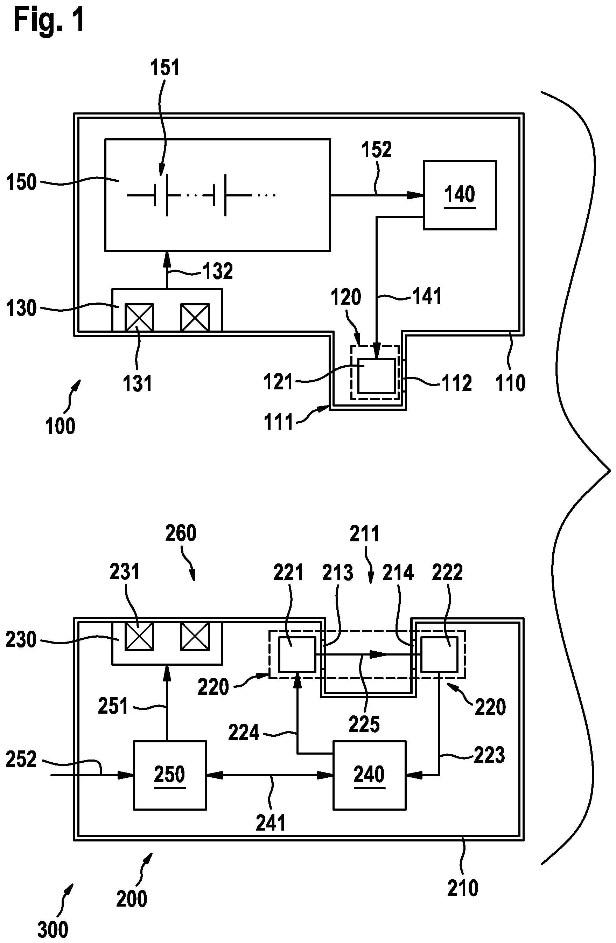

Die **Figur 1** zeigt eine erfindungsgemäße Anordnung 300 zum Laden einer Batterievorrichtung 100 mithilfe einer Ladestation 200. Bei der Batterievorrichtung 100 handelt es sich beispielsweise um ein sogenannten Batterie- bzw. Akkupack oder um ein elektrisches Gerät mit integrierten Batteriezellen. Die Batterievorrichtung 100 umfasst eine Energiespeichereinrichtung 150, die eine oder mehrere wiederaufladbare Batterie- bzw. Akkuzellen 151 aufweist. Zum Laden der Energiespeichereinrichtung 150 umfasst die Batterievorrichtung 100 eine elektrische Schnittstelle 130, die im vorliegenden Fall als induktive Schnittstelle mit einer induktiven Empfangsspule 131 ausgebildet ist. Eine von der elektrischen Schnittstelle 130 empfangene Energie wird über eine erste Verbindungsleitung 132 der Energiespeichereinrichtung 151 zugeführt. Zum Steuern des Ladevorgangs umfasst die Batterievorrichtung 100 ferner eine Steuereinrichtung 140, welche über die Verbindungsleitung 152 bestimmte Parameter der Batteriezellen 151 der Energiespeichereinrichtung 150 abfragt. Die Steuereinrichtung 140 ist über eine dritte Leitung 141 mit einer Kommunikationseinrichtung 120 der Batterievorrichtung 100 verbunden, welche eine optische Sendeeinrichtung 121 umfasst. Die optische Sendeeinrichtung 121 der Batterievorrichtung 100, welcher beispielsweise in Form einer Leuchtdiode (LED) ausgebildet ist, ist die innerhalb eines zapfenförmigen Gehäuseteils 111 des Gehäuses 110 untergebracht. Der zapfenförmige Gehäuseteil 111 verfügt über einen transparenten Fensterbereich 112, wobei die optische Sendeeinrichtung 121 derart ausgerichtet ist, dass das von ihr ausgesendete Licht über den transparenten Fensterbereich 112 abgestrahlt wird.

Die Ladestation 200 verfügt über eine Aufnahmeeinrichtung 260 für die Batterievorrichtung 100, welche im vorliegenden Fall als eine Auflagefläche für die Batterievorrichtung 100 ausgebildet ist. Im Bereich der Aufnahmeeinrichtung 260 weist das Gehäuse 210 einen Aufnahmeschacht 211 zur Aufnahme des zapfenförmigen Gehäuseteils 111 der Batterievorrichtung 100 auf. Dieser schachtförmige Gehäuseteil 211 kann, wie im vorliegenden Beispiel der Fall, als ein Sackloch oder alternativ auch als eine durchgehende Öffnung ausgebildet sein.

An zwei gegenüberliegenden Seitenwänden des Aufnahmeschachts 211 sind Fensterbereiche 213, 214 vorgesehen, welche im vorliegenden Beispiel als Ausschnitte im Gehäuse 210 der Ladestation 200 ausgebildet sind. Alternativ können die Fensterbereiche 213, 214 auch durch einen transparente Gehäuseteil gebildet werden.

Zur Detektion, ob sich eine Batterievorrichtung 100 in der Aufnahmeeinrichtung 260 der Ladestation 200 befindet, umfasst die Ladestation 200 eine optische Detektionseinrichtung 220 für die Batterievorrichtung 100. Als Detektionseinrichtung 220 dient dabei eine aus einer optischen Sendeeinrichtung 221, z.B. eine LED, und einer optischen Empfangseinrichtung 222, z.B. eine Photodiode, gebildete Lichtschranke. Die beiden optischen Einrichtungen 221, 222 sind dabei vorzugsweise an zwei sich gegenüberliegenden Seitenwänden des Aufnahmeschachts 211 angeordnet. Zwei innerhalb der Gehäusewand angeordnete Fensterbereiche 213, 214, die beispielsweise als Aussparungen im Gehäuse oder als transparente Gehäuseabschnitte ausgebildet sein können, erlauben die Übertragung eines optischen Signals 225 von der optischen Sendeeinrichtung 221 zur optischen Empfangseinrichtung 222. Beide optischen Einrichtungen 221, 222 sind über entsprechende Verbindungsleitungen 223, 224 mit einer internen Steuereinrichtung 240 der Ladestation 200 verbunden. Eine spezielle Logikschaltung (hier nicht gezeigt) der internen Steuereinrichtung 240 wertet die von der optischen Empfangseinrichtung 222 in Form von Lichtpulsen empfangenen Informationen aus und steuert auf Grundlage dieser Informationen die verschiedenen Funktionen der Ladestation 200. So wird zum Beispiel die optische Sendeeinrichtung 221 zur Detektion der Batterievorrichtung 100 so angesteuert, dass sie ein bestimmtes optisches Signal, vorzugsweise ein bestimmtes Standby-Pulsmuster, an die optische Empfangseinrichtung 222 aussendet. Die Steuereinrichtung 240 steuert ferner über die Verbindungsleitung 241 eine Leistungselektronik 250 an, welche wiederum den elektrischen Strom für die induktive Sendespule 231 der elektrischen Schnittstelle 230 der Ladestation 200 zur Verfügung stellt. Dazu ist die Leistungselektronik 250 ferner über eine Netzleitung 252 an ein externes Strom- bzw. Spannungsnetz angeschlossen.

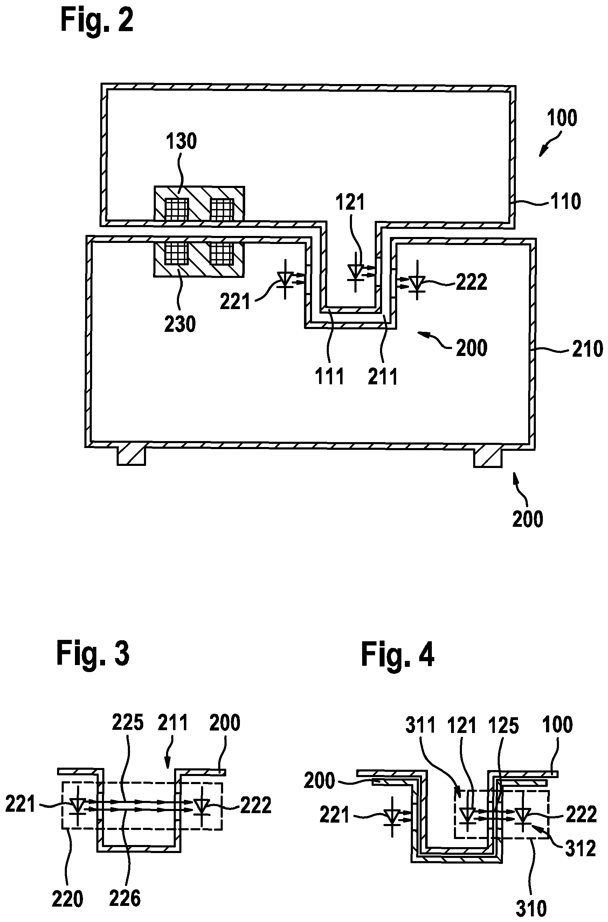

Zum Laden der Batteriezellen 151 wird die Batterievorrichtung 100 in einer vorgesehenen Weise in die Aufnahmeeinrichtung 260 der Ladestation 200 eingesetzt. Dabei wird der zapfenförmige Gehäuseteil 111 der Batterievorrichtung 100 in den Aufnahmeschacht 211 eingeführt. In seiner Endposition unterbricht der zapfenförmige Gehäuseteil 111 die optische Übertragungsstrecke der aus der optischen Sendeeinrichtung 221 und der optischen Empfangseinrichtung 222 gebildeten Lichtschranke, was der Steuereinrichtung 240 der Ladestation das Vorhandensein der Batterievorrichtung 100 in der Aufnahmeeinrichtung 260 signalisiert. Gleichzeitig wird durch das Einbringen des zapfenförmigen Gehäuseteils 111 in den Aufnahmeschacht 211 eine optische Verbindung zwischen der als Sender des Optokopplers 310 dienenden optischen Sendeeinrichtung 121 bzw. 311 der Batterievorrichtung und der als Empfänger 312 des Optokopplers 310 dienenden optischen Empfangseinrichtung 222 der Ladestation gebildet. Die **Figur 2** zeigt die Anordnung aus Figur 1 während des Einsetzens der Batterievorrichtung 100 in die Aufnahmeeinrichtung 260 der Ladestation 200. Aus Gründen der Übersichtlichkeit wurde in der Figur 2 auf die Darstellung der weiteren elektrischen Komponenten der Batterievorrichtung 100 und der Ladestation 200 verzichtet.

Die Figuren 3 und 4 zeigen die unterschiedliche Funktionsweisen der optischen Einrichtungen in verschiedenen Betriebszuständen der Ladeanordnung 300. Dargestellt sind jeweils schematische Detailansichten des Schachtförmigen Gehäuseteils 211 der Ladestation. Dabei zeigt die **Figur 3** den Aufnahmeschacht 211 bei entnommener Batterievorrichtung 100. In diesem Standby-Betriebsmodus sendet die optische Sendeeinrichtung 221 zyklisch bzw. periodisch ein vorgegebenes Standby-Lichtsignal aus, wie zum Beispiel ein spezielles Pulsmuster. Da die optische Übertragungsstrecke der Lichtschranke 220 nicht unterbrochen ist, kann die optische Empfangseinrichtung 222 das von der optischen Sendeeinrichtung 221 ausgesendete optische Signal ungehindert empfangen. Das empfangene Signal wird dann von einer Logikschaltung, die z.B. innerhalb der Steuereinrichtung 240 enthalten ist, ausgewertet und die Ladestation 200 anhand des erkannten Standby-Signals in den Standby-Modus versetzt. Dabei sendet die Steuereinrichtung 240 ein entsprechendes Steuersignal an die Leistungselektronik 250, welche wiederum die Stromversorgung der Sendespule 231 unterbricht. Sofern sich die Ladestation 200 bereits im Standby-Betriebsmodus befindet, wird dieser Modus weiterhin beibehalten.

Wird die Batterievorrichtung 100 in die Aufnahmeeinrichtung der Ladestation 200 eingesetzt, so schiebt sich der in den Aufnahmeschacht 211 der Ladestation eingeführte zapfenförmige Gehäuseteil 111 vor die optische Sendeeinrichtung 221 und unterbricht somit die optische Übertragungsstrecke der Lichtschranke 220. Wie in der Figur 4 gezeigt ist, bilden in dieser Betriebssituation die optische Empfangseinrichtung 222 der Ladestation und die optische Sendeeinrichtung 121 der Batterievorrichtung gemeinsam den diskret aufgebauten Optokoppler 310 zur Informationsübertragung zwischen Batterievorrichtung und Ladegerät. Dabei sendet die als Sender des Optokopplers dienende optische Sendeeinrichtung 121 Informationen der Steuereinrichtung 140 der Batterievorrichtung 100 in Form bestimmter Licht-Pulsmuster an die optische Empfangseinrichtung 222, welche als Sender 312 des Optokopplers 310 dient.

Im Folgenden wird die Funktionsweise des erfindungsgemäßen Ladesystems näher erläutert:
Bei entfernter Batterievorrichtung 100 empfängt die optische Empfangseinrichtung 222 von der optischen Sendeeinrichtung 221 des Ladegeräts ein spezielles Standby-Pulsmuster, welches von einer Logikschaltung der Steuereinrichtung 240 ausgewertet wird. Anhand des empfangenen Standby-Signals erkennt die Steuereinrichtung 240, dass keine Batterie eingesteckt ist und steuert die Leistungselektronik 250 der Ladestation so an, dass die elektrische Schnittstelle 230 der Ladestation 100 abgeschaltet bzw. die induktive Sendespule 231 stromlos geschaltet wird. Hierdurch wird erreicht, dass die Sendespule 231 im Standby-Modus kein störendes Magnetfeld erzeugt, welches unter Umständen zu Störungen im elektrischen System bzw. zur Erwärmung von Fremdobjekten führen könnte.

Durch das Einsetzen der Batterievorrichtung 100 in die Ladestation 200 wird eine optische Übertragungsstrecke zwischen der optischen Sendeeinrichtung 121 der Batterievorrichtung 100 und der optischen Empfangseinrichtung 222 der Ladestation 200 hergestellt. Wie in der Figur 4 dargestellt ist, bilden die optische Sendeeinrichtung 121 und die optische Empfangseinrichtung 222 in diesem Betriebszustand einen diskret aufgebauten Optokoppler 310.

Die Sendeeinrichtung 221 wird zyklisch bzw. periodisch mit einem vorgegebenen Standby-Pulsmuster beaufschlagt, welches bei entfernter Batterievorrichtung 100 von der Empfangseinrichtung 222 detektiert wird. Das empfangene Pulsmuster wird von einer auswärtigen Logik der internen Steuereinrichtung 240 der Ladestation ausgewertet und die Ladestation anschließend in den Standby-Modus überführt bzw. im Standby-Modus weiterhin belassen. Dazu steuert die Steuereinrichtung 240 die Leistungselektronik 250 der Ladestation derart an, dass die Stromzufuhr für die elektrische Schnittstelle 230 bzw. für die induktive Sendespule 231 in diesem Betriebsmodus stets ausgeschaltet ist. Da die Sendespule im aktivierten Standby-Modus kein Magnetfeld mehr erzeugt, führte diese Maßnahme zu einer deutlichen Reduktion der Leistungsaufnahme der Ladestation im Standby-Modus.

Wird die Batterievorrichtung 100, wie in Figur 4 gezeigt ist, auf die Ladestation 200 aufgelegt, dann wird der Lichteinfall der optischen Sendeeinrichtung 221 durch den zapfenförmigen Gehäuseteil 111 abgeschattet, und die optische Übertragungsstrecke der Lichtschranke unterbrochen. In diesem Fall detektiert die Steuereinrichtung 240 der Ladestation eine Unterbrechung des von der optischen Sender Einrichtung 221 zyklisch ausgesendeten Standby-Pulsmusters. Infolge dessen schaltet die Ladestation 200 vom Standby-Modus in einen normalen Betriebsmodus und beginnt mit der Übertragung von Leistung über die elektrische Schnittstelle 230, was durch eine entsprechende Ansteuerung der Leistungselektronik 250 durch die Steuereinrichtung 240 erfolgt. Wird nach einer vorgegebenen Zeitspanne kein Signal über die optische Schnittstelle empfangen, so kehrt die Ladestation erneut in den Standby-Modus zurück.

Während eines Ladevorgangs bzw. einer Energieübertragung wird die von der Batterievorrichtung benötigte bzw. angeforderte Stellgröße für die Energie durch ein optisches Puls-Übertragungsprotokoll übertragen. Ein solches Protokoll kann zum Beispiel mithilfe einer Variation des Tastverhältnisses, wie zum Beispiel bei der Puls-Weiten-Modulation der Fall, oder durch Variation der Impulsrate bzw.

Frequenz der einzelnen Pulse erfolgen. Hierbei stellt die optische Übertragungsstrecke die Rückkopplung des Regesystems dar. Somit wird die Stellgröße optisch über den diskret aufgebauten Optokoppler 310 bestehend aus der innerhalb des zapfenförmigen Gehäuseteils 111 angeordneten optischen Sendeeinrichtung 121 und der optischen Empfangseinrichtung 222 übertragen. Die Stellgröße selbst moduliert in geeigneter Weise die leistungselektronische Ansteuerung der Sendespule, um die angeforderte Energie über die elektrische Schnittstelle 130, 230 der Ladeanordnung zu übertragen.

Um weitere Energie einzusparen, schaltet das Ladegerät 200 im normalen Lade-Modus automatisch in den Standby-Modus um, sofern innerhalb einer vorgegebenen Zeitspanne kein Pulsmuster gesichtet wird. Eine solche Funktion kann innerhalb der Steuereinrichtung 240 in Form eines sogenannten "Missing-Pulse-Detector" realisiert werden, welcher die Pausen zwischen den einzelnen Pulsen analysiert und aktiv wird, wenn eine Pause zwischen zwei Pulsen die vorgegebene Zeitspanne T1 überschreitet. Eine solche Funktion lässt sich grundsätzlich auch zum Erkennen von Fehlerzuständen heranziehen. Wenn der Missing-Pulse-Detector über eine vorgegebene Zeitdauer keine eingehenden Lichtpulse registriert, kann auch auf einen Fehler im Ladesystem geschlossen werden. Durch den automatischen Wechsel in den Standby-Modus wird somit bei eventuellen Fehlern auf der Batteriepack- bzw. Geräteseite unverzüglich die Leistung reduziert bzw. die Energieübertragung gestoppt.

Sind die Batteriezellen 151 der Batterievorrichtung 100 vollständig geladen oder wird vom Endgerät 100 keine Leistung mehr benötigt, so wird die optische Sendeeinrichtung 121 der Batterievorrichtung 100 mit einem speziellen Pulsmuster 126, vorzugsweise einem eigenen Standby-Pulsmuster beaufschlagt. Hierbei wird jeweils ein relativ kurzer Puls gefolgt von einer relativ langen Pausenzeit T₃ ausgesendet. Dabei fällt die Pausenzeit T₃ des Standby-Pulsmusters 126 kürzer aus als die vorgegebene Zeitdauer T₁, mithilfe derer die interne Steuereinrichtung 240 der Ladestation 200 das Einstecken einer Batterievorrichtung 100 detektiert. Somit wird wirkungsvoll eine Energieübertragung verhindert, welche sonst nach dem Ablauf der Zeitspanne T₁ automatisch gestartet würde. Durch das kleine Tastverhältnis mit einer kurzen Pulsdauer und einer lange Pause ergibt sich eine energiesparende Übertragungsart. Ferner wird, um eine unnötige Entladung und gegebenenfalls eine Tiefentladung der Batteriezellen 151 wirkungsvoll zu vermeiden, die Übertragung des Standby-Pulsmusters 126 durch die optische Sendeeinrichtung 121 nach Erreichen eines vorgegebenen oberen Ladezustandes SOC_{high} (englisch State-Of-Charge) gestartet und beim Unterschreiten eines vorgegebenen unteren Ladezustandes SOC_{low} gestoppt. Die hieraus resultierende Hysterese unterbindet das typischerweise in der Nähe des Ladeendes (SOC 100 %) auftretende zyklische Ein- und Ausschalten des Ladevorganges. Der aktuelle Ladezustand der Batteriezellen 151 lässt sich beispielsweise mithilfe einer in der Batterievorrichtung 100 realisierten Spannungsmessung relativ einfach ermitteln. Somit wird eine unnötige Entladung durch den vom Aussenden des Standby-Pulsmusters 126 verursachten Stromverbrauch vermeiden.

Benötigt die Batterievorrichtung 100 erneut elektrische Energie, so wird die optische Sendeeinrichtung 121 der Batterievorrichtung für eine Zeitspanne, die mindestens der Zeitspanne T₁ entspricht, nicht mit Strom beaufschlagt. Hierdurch ergibt sich eine ähnliche Situation wie beim Einsetzen der Batterievorrichtung 100 in die Ladestation 200. Die Steuereinrichtung 240 der Ladestation 200 registriert über die Zeitspanne T₁ keine ankommenden Signale und initiiert daraufhin eine erneute Energieübertragung zur Batterievorrichtung 100. Da in diesem Fall zum Aktivieren des erneuten Ladens gerade keine Energie benötigt wird, können damit auch Batterievorrichtungen mit tief entladenen Batteriezellen wieder aufgeladen werden.

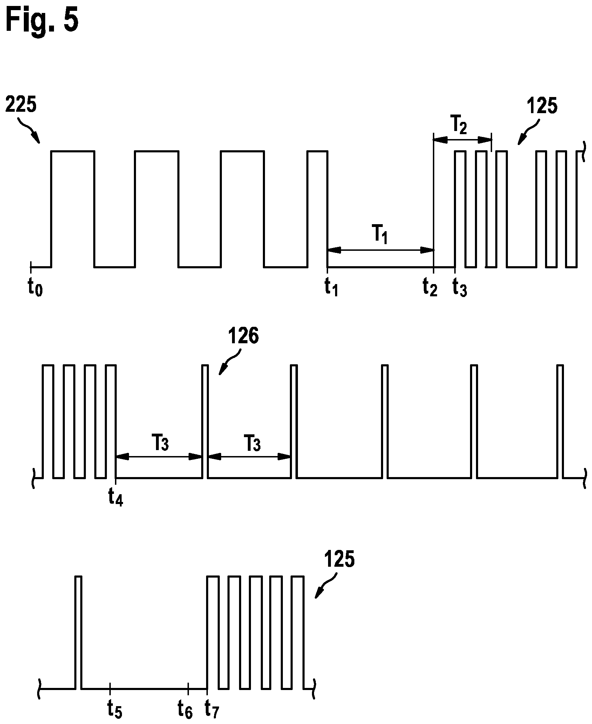

Im Folgenden wird auf typische Ablauffolgen bzw. Ladevorgänge detailliert eingegangen. In der **Figur 5** sind die auf die Empfangseinrichtung 222 eintreffenden optischen Signale dargestellt. Je nach Betriebssituation werden diese sowohl von der ersten optischen Sendeeinrichtung 221 der Ladestation 200 als auch von der zweiten optischen Sendeeinrichtung 121 der Batterievorrichtung 200 ausgesendet.

Zum Zeitpunkt t₀ wird die Ladestation 200 eingeschaltet bzw. an das externe Stromnetz angeschlossen. Kurz darauf geht die Ladestation 200 automatisch in den Standby-Modus über, wobei die optische Sendeeinrichtung 221 mit dem Aussenden ihres typischen Standby-Pulsmusters 225 beginnt. Solange dieses Standby-Pulsmuster 225 von der optischen Empfangseinrichtung 222 empfangen wird, registriert die interne Steuereinrichtung 240, dass sich noch keine Batterievorrichtung 100 in der Aufnahmeeinrichtung 260 der Ladestation 200 befindet.

Zum Zeitpunkt t₁ wird eine Batterievorrichtung in die Aufnahmeeinrichtung 260 der Ladestation 200 eingesteckt. Da dabei, wie in der Figur 4 gezeigt ist, die optische Sendeeinrichtung 221 vom zapfenförmigen Gehäuseteil 111 abgeschattet wird, kommt es zu einer Unterbrechung des Empfangs des von der Sendeeinrichtung 221 ausgesandten Standby-Pulsmusters. Nach Ablauf einer vorgegebenen Zeitspanne T₁ beginnt die Ladestation 200 zum Zeitpunkt t₂ mit der Energieübertragung und wartet für eine Zeitspanne T₂ auf die Antwort der Batterievorrichtung. Erfolgt innerhalb dieser Zeitspanne T₂ keine Rückmeldung von der Batterievorrichtung, so wird unverzüglich die Energieübertragung abgeschaltet und die Ladevorrichtung in den Standby-Modus überführt. Diese Situation ergibt sich zum Beispiel, wenn die Batterievorrichtung 100, die optische Empfangseinrichtung 222 oder die Auswerteschaltung 240 defekt sind. Somit kann eindeutig und sicher auf einen Fehlerfall geschlossen und so die Sicherheit und Zuverlässigkeit des gesamten Systems deutlich erhöht werden. In diesem Fall bleibt die Ladestation solange im Fehlermodus, d.h. ohne Energieübertragung, bis entweder die Ladestation aus- und wieder eingeschaltet oder die Empfangseinrichtung 222 erneut das spezifische Standby-Pulsmuster der Ladestation detektiert.

Antwortet die Batterievorrichtung hingegen innerhalb der Zeitspanne T₂, wie das in Figur 5 zum Zeitpunkt t₃ der Fall ist, schaltet die Ladestation vom Standby-Modus in einen Lade- bzw. Energieübertragungsmodus, wobei Energie über die elektrische Schnittstellen 230, 130 von der Ladestation 200 zur Batterievorrichtung 100 übertragen wird. Die für den Ladevorgang bzw. Betrieb notwendige Energieanforderung wird der Ladestation durch ein optisches Puls-Übertragungsprotokoll übermittelt. Wird die Batterievorrichtung nicht zuvor entnommen, so wird ein normaler vollständiger Ladevorgang bis zum Zeitpunkt t₄, welcher das Ende des Ladevorgangs darstellt, durchgeführt. Bleibt die Batterievorrichtung 100, wie in der Figur 5 der Fall ist, auch über das Ladeende zum Zeitpunkt t₄ hinaus eingesteckt, so startet die Batterievorrichtung mit dem Aussenden eines eigenen Standby-Pulsmusters 126. Wird die Batterievorrichtung vor dem Erreichen des Ladeendes zum Zeitpunkt t₄ jedoch von der Ladestation entfernt, so empfängt die optische Empfangseinrichtung 222 wieder das spezifische Standby-Pulsmuster 225 der Sendeeinrichtung 221 (diese Situation ist hier nicht gezeigt). In beiden Fällen wechselt die Ladestation 200 jeweils von einem Lade- bzw. Energieübertragungsmodus in den energiesparenden Standby-Modus.

Somit können sich nach dem Ende des Ladevorgangs grundsätzlich die folgenden Situationen ergeben: Wird die Batterievorrichtung 100 von der Ladestation 200 entfernt, so wird die Ladestation 200 analog zu dem oben beschriebenen Entfernen der Batterievorrichtung während des Ladevorgangs in den Standby-Modus überführt. Bleibt die Batterievorrichtung 100, wie in der Figur 5 gezeigt ist, auch nach dem Ende des Ladevorgangs in der Ladestation 200 eingesteckt, so verbleibt die Ladestation 200 solange im Standby-Modus, bis der Ladezustand zum Zeitpunkt t₅ unter dem Grenzwert SOC_{low} fällt. In diesem Zustand erzwingt die Batterievorrichtung 100 durch einen absichtlichen Übertragungsstopp des Standby-Pulsmusters 126 einen erneuten Start der Energieübertragung zum Zeitpunkt t₆. Des Weiteren entspricht der Zeitpunkt t₆ in analoger Weise dem Zeitpunkt t₂, womit ein neuer Lade- bzw. Energieübertragungszyklus beginnt. Dabei antwortet die Batterievorrichtung zum Zeitpunkt t₇ auf den Beginn der Energieübertragung mit dem Senden eines entsprechenden Pulsmusters 125.

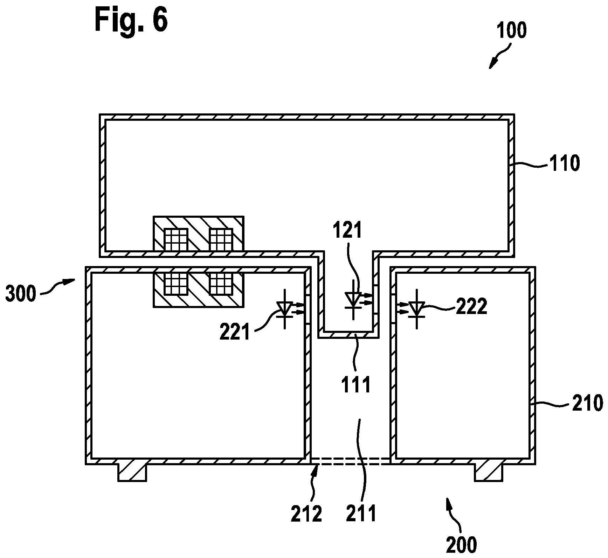

Die **Figur 6** zeigt eine alternative Gestaltung des Aufnahmeschachts 211 in Form einer im Wesentlichen senkrecht verlaufenden durchgehenden Öffnung innerhalb des Gehäuses 210 der Ladestation 200. Hierdurch wird eine höhere Unempfindlichkeit des optischen Übertragungssystems 121, 221, 222 bzw. 220 gegenüber Verschmutzung erreicht, da Fremdkörper und Schmutzpartikel, welche in den Aufnahmeschacht 211 hineingelangen und grundsätzlich geeignet sind die Funktion der optischen Einrichtungen der Ladeanordnung 300 zu beeinträchtigen, den Aufnahmeschacht 211 durch die Öffnung 212 im unteren Teil des Gehäuses 210 wieder verlassen können.

Obwohl das erfinderische Konzept in der vorstehenden Beschreibung lediglich im Zusammenhang mit austauschbaren Batterie- oder Akkupacks beschrieben wurde, bezieht sich die Erfindung grundsätzlich auch fest installierte Akku- bzw. Batteriezellen. Es ist ferner im Sinne der Erfindung das erfinderische Konzept nicht nur auf die bekannten Batterie- bzw. Akkutypen einzuschränken. Vielmehr kommt hierfür grundsätzlich jede geeignete Energiespeichertechnologie infrage, die im Zusammenhang mit dem beschriebenen induktiven Ladeverfahren verwendbar ist. Zur Realisierung der optischen Detektionseinrichtung sowie des Optokopplers eignet sich neben sichtbarem Licht grundsätzlich auch jede andere geeignete Lichtstrahlung, wie z.B. infrarotes (IR) oder ultraviolettes (UV) Licht. nur auf die bekannten Batterie- bzw. Akkutypen einzuschränken. Vielmehr kommt hierfür grundsätzlich jede geeignete Energiespeichertechnologie infrage, die im Zusammenhang mit dem beschriebenen induktiven Ladeverfahren verwendbar ist. Zur Realisierung der optischen Detektionseinrichtung sowie des Optokopplers eignet sich neben sichtbarem Licht grundsätzlich auch jede andere geeignete Lichtstrahlung, wie z.B. infrarotes (IR) oder ultraviolettes (UV) Licht.

## Patentansprüche

1. Anordnung (300) zum induktiven Laden einer Batterievorrichtung (100) umfassend die Batterievorrichtung (100) und eine Ladestation (200) mit einer Aufnahmeeinrichtung (260) für die Batterievorrichtung (100) und einer Detektionseinrichtung (220) für die Batterievorrichtung (100), wobei die Detektionseinrichtung (220) eine erste optische Sendeeinrichtung (221) zum Aussenden eines ersten optischen Signals (225) und eine optische Empfangseinrichtung (222) zum Empfangen des ersten optischen Signals (225) umfasst, wobei die Batterievorrichtung (100) eine zweite optische Sendeeinrichtung (121) zum Aussenden eines zweiten und dritten optischen Signals (125, 126) umfasst, wobei die zweite optische Sendeeinrichtung (121) als Sender eines diskret aufgebauten Optokopplers (310) zum Übertragen von Informationen von der Batterievorrichtung (100) zur Ladestation (200) dient, und wobei die optische Empfangseinrichtung (222) der Ladestation (200) als Empfänger des diskret aufgebauten Optokopplers (310) zum Empfangen des zweiten und dritten optischen Signals (125, 126) ausgebildet ist.

2. Anordnung (300) nach Anspruch 1, wobei die Batterievorrichtung (100) ein Gehäuse (110) mit einem zapfenförmigen Gehäuseteil (111) aufweist, welcher beim Einsetzen der Batterievorrichtung (100) zwischen der ersten optischen Sendeeinrichtung (221) und der optischen Empfangseinrichtung (222) der Ladestation (200) eingebracht wird und dabei das ersten optische Signal (225) unterbricht, und wobei die zweite optische Sendeeinrichtung (121) in dem zapfenförmigen Gehäuseteil (111) derart untergebracht ist, dass sich die zweite optische Sendeeinrichtung (121) bei eingesetzter Batterievorrichtung (100) im Sichtfeld der optischen Empfangseinrichtung (222) befindet.

3. Anordnung (300) nach Anspruch 2, wobei die Ladestation (200) einen Aufnahmeschacht (211) für den zapfenförmigen Gehäuseteil (111) der Batterievorrichtung (100) umfasst, in welchem die optische Sendeeinrichtung (221) und die optische Empfangseinrichtung (222) der Ladestation (200) einander gegenüber liegend angeordnet sind

4. Anordnung (300) nach Anspruch 3, wobei der Aufnahmeschacht (211) als eine durchgehende Öffnung (212) innerhalb des Gehäuses (210) der Ladestation (200) ausgebildet ist.

5. Anordnung (300) nach einem der vorhergehenden Ansprüche, wobei die Ladestation (200) eine induktive Sendespule (231) zur Übertragung von Energie in Form eines magnetischen Wechselfeldes an eine induktive Empfangsspule (131) der Batterievorrichtung (100) umfasst, wobei die Ladestation (200) ausgebildet ist, mit der Übertragung der Energie zu beginnen, wenn der Empfang des ersten optischen Signals (225) über eine vorgegebene erste Zeitspanne (T₁) unterbrochen wird, wobei die Ladestation (200) ferner ausgebildet ist, die Übertragung der Energie zu stoppen, wenn über eine vorgegebene zweite Zeitspanne (T₂) kein zweites optisches Signal (125) empfangen wird und/oder wenn das dritte optische Signal (126) empfangen wird.

6. Anordnung (300) nach einem der vorhergehenden Ansprüche, wobei die Batterievorrichtung (100) ausgebildet ist, Informationen zur Identifikation, zum aktuellen Ladestatus bzw. Kapazitäts-Restmenge, zu einer eventuellen Fehlfunktion und/oder zum aktuellen Leistungsbedarf der Batterievorrichtung (100) mithilfe eines optischen Puls-Übertragungsprotokolls über die optische Sendeeinrichtung (121) an die optische Empfangseinrichtung (222) der Ladestation (200) zu senden.

7. Verfahren zum induktiven Laden einer Batterievorrichtung (100), wobei die Batterievorrichtung (100) in eine Aufnahmeeinrichtung (260) der Ladestation (200) eingesetzt wird, wobei mithilfe einer aus einer ersten optischen Sendeeinrichtung (221) welche ein erstes optisches Signal (225) aussendet, und einer optischen Empfangseinrichtung (222), welches das erste optische Signal (225) empfängt, bestehenden Detektionseinrichtung (220) das Einsetzen der Batterievorrichtung (100) in die Aufnahmeeinrichtung (260) detektiert wird, wobei eine Energieübertragung von einer induktiven Sendespule (231) der Ladestation (200) zu einer induktiven Empfangsspule (131) der Batterievorrichtung (100) gestartet wird, wenn die Übertragung des ersten optischen Signals (225) über einen vorgegebenen ersten Zeitraum (T₁) unterbrochen wird, wobei der Ladevorgang gestartet wird, wenn die optische Empfangseinrichtung (222) innerhalb einer zweiten Zeitspanne (T₂) ein zweites optisches Signal (125) von einer zweiten optischen Sendeeinrichtung (121) der Batterievorrichtung (100) empfängt, und wobei der Ladevorgang gestoppt wird, wenn die optische Empfangseinrichtung (222) ein drittes optisches Signal (126) von der zweiten optischen Sendeeinrichtung (121) empfängt

8. Verfahren nach Anspruch 7, wobei die Energieübertragung wieder gestoppt wird, wenn die optische Empfangseinrichtung (222) nach Ablauf der zweiten Zeitspanne (T₂) kein zweites optisches Signal (125) von einer zweiten optischen Sendeeinrichtung (121) der Batterievorrichtung (100) empfängt.

9. Verfahren nach Anspruch 7 oder 8, wobei der Ladevorgang gestoppt wird, wenn die optische Empfangseinrichtung (222) nach Entnahme der Batterievorrichtung (100) erneut das erste optische Signal (225) empfängt.

10. Verfahren nach einem der Anspruche 7 bis 9, wobei der Ladevorgang wieder gestartet wird, wenn bei eingesetzter Batterievorrichtung (100) die Übertragung des dritten optischen Signals (126) von der zweiten optischen Sendeeinrichtung (121) zur optischen Empfangseinrichtung (222) über einen Zeitraum unterbrochen wird, welcher wenigstens der ersten Zeitspanne (T₁) entspricht.

## Claims

1. Arrangement (300) for inductively charging a battery apparatus (100), comprising the battery apparatus (100) and a charging station (200) having a receiving device (260) for the battery apparatus (100) and a detection device (220) for the battery apparatus (100), the detection device (220) comprising a first optical transmitting device (221) for emitting a first optical signal (225) and an optical receiving device (222) for receiving the first optical signal (225), the battery apparatus (100) comprising a second optical transmitting device (121) for emitting a second and a third optical signal (125, 126), the second optical transmitting device (121) being used as a transmitter of a discretely constructed optocoupler (310) for transmitting information from the battery apparatus (100) to the charging station (200), and the optical receiving device (222) of the charging station (200) being in the form of a receiver of the discretely constructed optocoupler (310) for receiving the second and third optical signals (125, 126).

2. Arrangement (300) according to Claim 1, the battery apparatus (100) having a housing (110) with a tap-shaped housing part (111) which, when inserting the battery apparatus (100), is introduced between the first optical transmitting device (221) and the optical receiving device (222) of the charging station (200) and in the process interrupts the first optical signal (225), and the second optical transmitting device (121) being accommodated in the tap-shaped housing part (111) in such a manner that the second optical transmitting device (121) is in the field of view of the optical receiving device (222) when the battery apparatus (100) is inserted.

3. Arrangement (300) according to Claim 2, the charging station (200) comprising a receiving shaft (211) for the tap-shaped housing part (111) of the battery apparatus (100), in which the optical transmitting device (221) and the optical receiving device (222) of the charging station (200) are arranged opposite one another.

4. Arrangement (300) according to Claim 3, the receiving shaft (211) being in the form of a continuous opening (212) inside the housing (210) of the charging station (200).

5. Arrangement (300) according to one of the preceding claims, the charging station (200) comprising an inductive transmitting coil (231) for transmitting energy in the form of an alternating magnetic field to an inductive receiving coil (131) of the battery apparatus (100), the charging station (200) being designed to begin the transmission of the energy if the reception of the first optical signal (225) is interrupted over a predefined first time period (T₁), the charging station (200) also being designed to stop the transmission of the energy if a second optical signal (125) is not received and/or if the third optical signal (126) is received over a predefined second time period (T₂).

6. Arrangement (300) according to one of the preceding claims, the battery apparatus (100) being designed to transmit identification information, information relating to the current charging status or remaining amount of capacity, information relating to a possible malfunction and/or information relating to the current power requirement of the battery apparatus (100) to the optical receiving device (222) of the charging station (200) via the optical transmitting device (121) with the aid of an optical pulse transmission protocol.

7. Method for inductively charging a battery apparatus (100), the battery apparatus (100) being inserted into a receiving device (260) of the charging station (200), the insertion of the battery apparatus (100) into the receiving device (260) being detected with the aid of a detection device (220) comprising a first optical transmitting device (221), which emits a first optical signal (225), and an optical receiving device (222), which receives the first optical signal (225), energy transmission from an inductive transmitting coil (231) of the charging station (200) to an inductive receiving coil (131) of the battery apparatus (100) being started if the transmission of the first optical signal (225) is interrupted over a predefined first period (T₁), the charging operation being started if the optical receiving device (222) receives a second optical signal (125) from a second optical transmitting device (121) of the battery apparatus (100) within a second time period (T₂), and the charging operation being stopped if the optical receiving device (222) receives a third optical signal (126) from the second optical transmitting device (121).

8. Method according to Claim 7, the energy transmission being stopped again if the optical receiving device (222) does not receive a second optical signal (125) from a second optical transmitting device (121) of the battery apparatus (100) after expiry of the second time period (T₂).

9. Method according to Claim 7 or 8, the charging operation being stopped if the optical receiving device (222) receives the first optical signal (225) again after the battery apparatus (100) has been removed.

10. Method according to one of Claims 7 to 9, the charging operation being started again if the transmission of the third optical signal (126) from the second optical transmitting device (121) to the optical receiving device (222) is interrupted over a period corresponding at least to the first time period (T₁) when the battery apparatus (100) is inserted.

## Revendications

1. Arrangement (300) de charge inductive d'un dispositif à batterie (100), comprenant le dispositif à batterie (100) et une station de charge (200) pourvue d'un appareil d'accueil (260) pour le dispositif à batterie (100) et un appareil de détection (220) pour le dispositif à batterie (100), l'appareil de détection (220) comportant un premier appareil d'émission optique (221) destiné à émettre un premier signal optique (225) et un appareil de réception optique (222) destiné à recevoir le premier signal optique (225), le dispositif à batterie (100) comprenant un deuxième appareil d'émission (121) destiné à émettre un deuxième et un troisième signal optique (125, 126), le deuxième appareil d'émission (121), en tant qu'émetteur d'un optocoupleur (310) construit avec des composants discrets, servant à la transmission d'informations du dispositif à batterie (100) à la station de charge (200), et l'appareil de réception optique (222) de la station de charge (200), en tant que récepteur de l'optocoupleur (310) construit avec des composants discrets, étant configuré pour recevoir le deuxième et le troisième signal optique (125, 126).

2. Arrangement (300) selon la revendication 1, le dispositif à batterie (100) possédant un boîtier (110) ayant une partie de boîtier (111) en forme de tenon qui, lors de l'insertion du dispositif à batterie (100), est introduite entre le premier appareil d'émission optique (221) et l'appareil de réception optique (222) de la station de charge (200) et interrompt alors le premier signal optique (225), et le deuxième appareil d'émission optique (121) étant logé dans la partie de boîtier (111) en forme de tenon de telle sorte que lorsque le dispositif à batterie (100) est inséré, le deuxième appareil d'émission optique (121) se trouve dans le champ de vision de l'appareil de réception optique (222).

3. Arrangement (300) selon la revendication 2, la station de charge (200) comportant un puits d'accueil (211) pour la partie de boîtier (111) en forme de tenon du dispositif à batterie (100), dans lequel l'appareil d'émission optique (221) et l'appareil de réception optique (222) de la station de charge (200) sont disposés l'un au-dessus de l'autre.

4. Arrangement (300) selon la revendication 3, le puits d'accueil (211) étant réalisé sous la forme d'une ouverture traversante (212) à l'intérieur du boîtier (210) de la station de charge (200).

5. Arrangement (300) selon l'une des revendications précédentes, la station de charge (200) comportant une bobine d'émission inductive (231) destinée à la transmission d'énergie sous la forme d'un champ magnétique alternatif à une bobine de réception inductive (131) du dispositif à batterie (100), la station de charge (200) étant configurée pour commencer la transmission de l'énergie lorsque la réception du premier signal optique (225) est interrompue pendant un premier intervalle de temps (T₁) prédéfini, la station de charge (200) étant en outre configurée pour arrêter la transmission de l'énergie si aucun deuxième signal optique (125) n'a été reçu pendant un deuxième intervalle de temps (T₂) prédéfini et/ou lorsque le troisième signal optique (126) est reçu.

6. Arrangement (300) selon l'une des revendications précédentes, le dispositif à batterie (100) étant configuré pour envoyer des informations servant à l'identification, à propos de l'état de charge actuel ou de la capacité restante, concernant un éventuel dysfonctionnement et/ou à propos du besoin de puissance actuel du dispositif à batterie (100) à l'aide d'un protocole de transmission par impulsions optiques par le biais de l'appareil d'émission optique (121) à l'appareil de réception optique (222) de la station de charge (200).

7. Procédé de charge inductive d'un dispositif à batterie (100), le dispositif à batterie (100) étant inséré dans un appareil d'accueil (260) de la station de charge (200), l'insertion du dispositif à batterie (100) dans l'appareil d'accueil (260) étant détectée à l'aide d'un appareil de détection (220) composé d'un premier appareil d'émission optique (221), lequel émet un premier signal optique (225), et d'un appareil de réception optique (222), lequel reçoit le premier signal optique (225), une transmission d'énergie d'une bobine d'émission inductive (231) de la station de charge (200) à une bobine de réception inductive (131) du dispositif à batterie (100) étant démarrée lorsque la transmission du premier signal optique (225) est interrompue pendant un premier intervalle de temps (T₁) prédéfini, l'opération de charge étant démarrée lorsque l'appareil de réception optique (222), à l'intérieur d'un deuxième intervalle de temps (T₂), reçoit un deuxième signal optique (125) de la part d'un deuxième appareil d'émission optique (121) du dispositif à batterie (100) et l'opération de charge étant arrêtée lorsque l'appareil de réception optique (222) reçoit un troisième signal optique (126) de la part du deuxième appareil d'émission optique (121).

8. Procédé selon la revendication 7, la transmission d'énergie étant de nouveau arrêtée lorsque l'appareil de réception optique (222), après écoulement du deuxième intervalle de temps (T₂), ne reçoit pas de deuxième signal optique (125) de la part d'un deuxième appareil d'émission (121) du dispositif à batterie (100).

9. Procédé selon la revendication 7 ou 8, l'opération de charge étant arrêtée lorsque l'appareil de réception optique (222), après retrait du dispositif à batterie (100), reçoit de nouveau le premier signal optique (225).

10. Procédé selon l'une des revendications 7 à 9, l'opération de charge étant redémarrée lorsque, avec le dispositif à batterie (100) inséré, la transmission du troisième signal optique (126) du deuxième appareil d'émission optique (121) à l'appareil de réception optique (222) est interrompue pendant un intervalle de temps qui correspond au moins au premier intervalle de temps (T₁).
